Europäisches Patentamt

European Patent Office

Office européen des brevets

(19)

(11) Publication number: **0 250 169 B1**

(12) **EUROPEAN PATENT SPECIFICATION**

(45) Date of publication of patent specification: **04.09.91**

(51) Int. Cl.⁵: **B01J 4/00, B01J 8/24,** **C08F 2/34, C08F 10/00**

(21) Application number: **87305196.5**

(22) Date of filing: **12.06.87**

(54) **Fluidised bed discharge device.**

(30) Priority: **16.06.86 FR 8608664**

(43) Date of publication of application: **23.12.87 Bulletin 87/52**

(45) Publication of the grant of the patent: **04.09.91 Bulletin 91/36**

(84) Designated Contracting States: **BE DE ES FR GB IT NL SE**

(56) References cited: **EP-A- 0 071 430** **EP-A- 0 088 655** **EP-A- 0 173 261** **EP-A- 0 202 076**

(73) Proprietor: **BP Chemicals Limited** **Belgrave House 76 Buckingham Palace Road** **London, SW1W 0SU(GB)**

(72) Inventor: **Raufast, Charles** **BP Chimie S.A. BP No. 2** **F-13117 Lavera(FR)**

(74) Representative: **Denbigh, Keith Warwick et al** **BP INTERNATIONAL LIMITED Patents Division Chertsey Road** **Sunbury-on-Thames Middlesex, TW16 7LN(GB)**

## Description

The present invention relates to an apparatus and a process for removing products present in a reactor used for the polymerisation and/or copolymerisation of olefins in a fluidised bed.

It is known that polymerisation of alpha-olefins, such as ethylene, or mixtures of alpha-olefins, containing 2-12 carbon atoms for example ethylene, propylene and 1-butene can be carried out in the gaseous phase in the presence of a catalytic composition comprising, for example, (a) a solid compound of a transition metal of sub groups IVa, Va and VIa of the Periodic Classification of the Elements, preferably titanium, this compound also optionally containing magnesium and (b) one or more organometallic compounds of a metal in Groups I, II or III of the Periodic Classification, preferably an organoaluminium compound.

It is also known that polymerisation, or copolymerisation of alpha-olefins can be carried out using the catalysts described above, or similar catalysts, by a fluidised bed technique. This operation is generally carried out in a vertical reactor in which the granules of polymer being formed are maintained in a fluidised state by means of an ascending flow of gas containing the olefin or olefins to be polymerised. Such a reactor is usually equipped, in its lower portion, with a perforated or porous plate - hereafter called a fluidisation grid - which enables the flow of gas introduced under the grid to be distributed in the reactor, and maintains the particles of polymer in a fluidised state above the grid. A side tube situated above the grid enables part of the polymer contained in the reactor to be removed intermittently or continuously.

It is known that material can be discharged from the polymerisation reactor by means of apparatus comprising an intermediate vessel connected to the reactor by means of pipework and connected to a receiver situated downstream also by means of pipework. Each of these sets of pipework is provided with a valve. These valves are operated sequentially in such a manner that the assembly operates like an air-lock, one part of the gas and polymer present in the reactor passing into the intermediate vessel and then into the receiver.

European Patent Application No. 0088655 discloses an apparatus for effecting the bottom drainage of a fluidised bed reactor producing polyolefins, used occasionally for the partial or total drainage of the polymer particles forming the bed just above a fluidisation grid. The apparatus comprises a vessel connected to the fluidisation grid by means of a vertical pipe equipped with a rotating plug valve, and connected to a discharge pipe also equipped with a rotating plug valve. However, the two rotating plug valves comprise driving means for discontinuously rotating to provide a high speed of opening.

It has been observed in industrial practice that operation of the valves leads to substantial pressure fluctuations in the reactor. Whilst it has been found that the magnitude of the pressure fluctuations can be reduced to some extent by using an intermediate chamber having a smaller volume, it then becomes necessary to increase the frequency and speed of the valve operation to accommodate the same discharge rate of the polymer particles from the reactor. However it has been found in practice that increasing the frequency and the speed of valve operation leads to the discharge of material containing an undesirably higher ratio of monomer; polymer. This in turn leads to the necessity to recompress larger quantities of the unreacted monomeric gases before recyling them to the reactor. Moreoever, it has been observed that the moving parts of the valves wear rapdily, leading to substantial losses of monomer through leakage. These factors detract from the economy and safety of the gas fluidised bed polymerisation process.

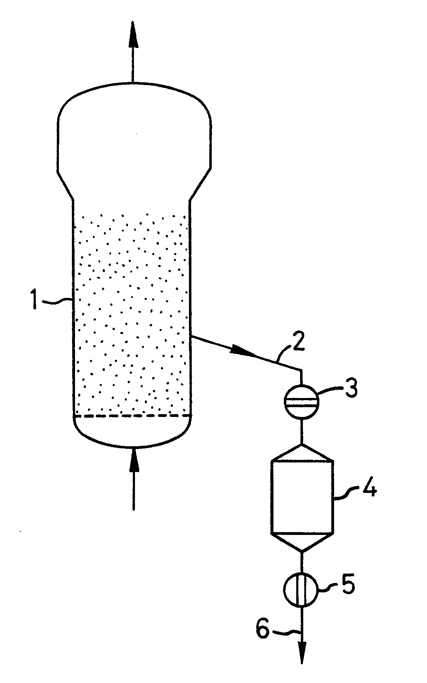

It has now been found that these disadvantages may be effectively reduced using the apparatus and the process of the invention, ·represented diagrammatically in Figure 1.

In Figure 1, a schematic representation is given as follows:

- a reactor (1) in which the polymerisation or co-polymerisation of alpha-olefins is carried out in a fluidised bed,
- an assembly consisting of a vessel (4) connected to the reactor (1) by a pipe (2) provided with a valve (3), and to a receiver (not shown) by a pipe (6) provided with a valve (5).

The present invention provides apparatus for discharging solid particulate polyolefin product from a reactor wherein gas-fluidised bed polymerisation of one or more alpha-olefins is carried out, the apparatus comprising a vessel (4) connected to the reactor (1) by means of a pipe (2) provided with a valve (3) and connected to a receiver situated downstream by means of a pipe (6) provided with a valve (5), the said apparatus being characterised in that:

- the valves (3) and (5) consist of continuously rotating plug valves, these valves being connected with each other in such a way that the two valves do not open at the same time, even partly, and
- the volume of vessel (4) comprises between 1/10 and 1/1000, preferably between 1/100 and 1/500, of the volume of fluidised solid contained in the reactor (1).

By preference, the passages provided in the plugs of the valves (3) and (5) are straight with an axis perpendicular to the axis of rotation of the valves (3) and (5) - advantageously, these passages are cylindrical in shape, with a circular basis.

The solid present in the fluidisation reactor is generally in the form of particles having dimensions between 0.1 mm and 5 mm and a mean dimension preferably between 0.5 mm and 1.5 mm. The dimensions of the orifices of the passages passing through the plugs of the valves (3) and (5) are greater than the dimensions of the largest particles of the solid contained in the reactor (1). These dimensions are preferably between 2 and 200 times the dimensions of the largest particles of solid contained in the reactor (1) and more preferably between 5 and 50 times.

Also by preference, the dimensions of the orifices of the passages passing through the plugs of the valves (3) and (5) are equal to or smaller than 0.35D, D being the mean exterior diameter of the plug.

Advantageously, the valves (3) and (5) are chosen as being valves with a spherical plug turning inside a housing, the gas-tightness between the plug and the housing being assured by two seals or by two mechanical packings.

The speed of rotation of the valves may lie between, for example, 0.5 and 10 revolutions per minute, and the linear speed of the periphery of the plug may advantageously lie between 1 and 20 m/s.

It should be noted that short cycles may be chosen without any inconvenience, which enables a reduction in the volume of the vessel (4) for a particular flow of solid. It has been observed, in fact, that even when the valves (3) and (5) are turned in a relatively rapid way, the vessel (4) is filled in a satisfactory manner, without causing an excessive flow of gas to take place from the reactor (1) to the vessel (4).

The connection between the valves (3) and (5) may be brought about by any known technique, particularly a mechanical or electrical one. Preferably, the valves (3) and (5) are moved at the same speed, their opening being out of phase by 90°. This is advantageously carried out by driving the two valves (3) and (5) by a single, variable speed, motor.

The apparatus of the invention is connected to the reactor (1) at a level situated below the upper part of the fluidised bed. In the case that the reactor (1) contains a fluidisation grid, this level is preferably situated above the grid at one or more points between the said grid and the lower third or most preferably, the lower quarter of the fluidised bed.

The invention further relates to a process for discharging solid particulate polyolefin product from a gas-fluidised bed polymerisation reactor (1) using the apparatus claimed in claim 1, wherein the gas pressure in the reactor (1) is higher than that in the downstream receiver, said process comprising the following sequential cycle of operations as the valves (3) and (5) undergo continuous rotation;

A. both valves (3) and (5) are at their fully closed position;

B. valve (3) opens progressively to admit solid particulate product and gas from reactor (1) into vessel (4), valve (5) remaining closed;

C. valve (3) closes, valve (5) remaining closed;

D. valve (5) opens progressively so that solid particulate product and gas discharge from vessel 4 into the receiver situated downstream, valve (3) remaining closed;

E. valve (5) closes and valve (3) remains closed and cycle resumes at step A.

The polymerisation reactor (1) is preferably in continuous operation under a pressure higher than the pressure existing in the receiver situated downstream, and the valves (3) and (5) are in continuous rotation. At the start of the cycle, the valves (3) and (5) are both closed. As the cycle proceeds, the valve (3) opens progressively, whilst valve (5) remains closed. By reason of the pressure difference existing between the reactor (1) and the vessel (4), the latter is filled from part of the fluidised bed contained in the reactor (1). The valve (3) closes progressively, and when it is entirely closed, valve (5) proceeds to open, thus causing discharge of solid and gas present in vessel (4) to the receiver situated downstream, under the influence of the difference in pressure between the vessel (4) and the receiver. Valve (5) closes progressively whilst valve (3) remains closed and the cycle is then reproduced in the same way.

The speed of rotation of the valves may lie between, for example, 0.5 and 10 revolutions per minute, and the linear speed of the periphery of the plug may advantageously lie between 1 and 20 m/s.

Preferably, the length of time that valve (3) is open is sufficiently long for the pressure existing in the vessel (4) at the end of the filling up of the latter to be approximately equal to the pressure existing in the reactor (1), such that the vessel (4) is entirely filled from the fluidised bed.

In a similar manner, the length of time that valve (5) is open is preferably sufficiently long for the pressure existing in the vessel (4) at the end of the period of emptying of the latter, to be approximately equal to the pressure existing in the receiver downstream, such that the vessel (4) is emptied completely of the particulate solid it contains.

It has been observed that the apparatus of the invention operates in a satisfactory manner even when the difference in pressure between the reactor (1) and the downstream receiver is low. Generally, this difference in pressure lies between 0.1 MPa and 5 MPa and more frequently between 1 and 3 MPa. The process whereby the apparatus according to the invention described above is put into use, may equally well be applied to the emptying of a polymerisation reactor working discontinuously, or to the partial or total emptying of a polymerisation reactor working continuously, when it is desired, for example to modify the quality of the polymer produced in the polymerisation reactor. The same process may also be used for emptying a polymerisation reactor in which polymerisation has been interrupted by replacement of the fluidising gas, containing one or more alpha-olefins, by a non-reactive gas such as nitrogen.

The apparatus and process of the present invention are suitably used in homopolymerisation or in copolymerisation of alpha-olefins.

The following, non-limiting example illustrates the invention.

An ethylene polymerisation reactor (1) working at 2 MPa absolute contains a bed of polymer in a fluidised state at a concentration of 200 $Kg/m^3$. This polymer bed consists of solid particles whose mean dimension is 0.75 mm, 90% of these particles having a dimension lying between 0.2 and 1.3 mm.

The reactor is equipped with a 100 litre vessel (4) and 2 valves (3) and (5) provided with spherical plugs 150 mm in diameter, having a cylindrical passage 50 mm in diameter. The valves turn continuously at 2 revolutions per minute. At each revolution, 25 Kg of polymer pass into the vessel (4), then into the receiver situated at valve (5); this receiver being at a pressure of 0.12 MPa absolute. After one year of substantially continuous operation, corresponding to about a million cycles, no wear liable to cause any appreciable loss of gas-tightness was observed on the valves, whilst a similar apparatus equipped with identical valves operating in a discontinuous manner showed appreciable wear on the valve seals and a substantial loss of gas-tightness after only 50000 cycles.

## Claims

1. Apparatus for discharging particulate polyolefin product from a reactor wherein gas-fluidised bed polymerisation of one or more alpha-olefins is carried out, the apparatus comprising a vessel (4) connected to the reactor (1) by means of a pipe (2) provided with a rotatable plug valve (3) and connected to a receiver situated downstream by means of a pipe (6) provided with a rotatable plug valve (5), the said apparatus being characterised in that:
   - the two rotatable plug valves (3) and (5) comprise driving means for continuously rotating them and connecting means such that during operation, the two valves at the same instant cannot be fully or even partially open, and
   - the volume of the vessel (4) comprises between 1/10 and 1/1000, and preferably between 1/100 and 1/500 of the volume of fluidised solid contained in the reactor (1).

2. Apparatus according to Claim 1, characterised in that the connecting means comprise a mechanical or electrical connection between the two rotating plug valves (3) and (5).

3. Apparatus according to Claim 1 or Claim 2, characterised in that the driving means comprise a single, variable speed motor.

4. Apparatus according to any of Claims 1 to 3, in which the passages provided in the plugs of the valves (3) and (5) are straight and have an axis perpendicular to the axis of rotation of valves (3), and (5).

5. Apparatus according to Claim 4, in which the passages in the plugs (3) and (5) are cylindrical, with a circular basis.

6. Apparatus according to any of the Claims 1 to 5, characterised in that the dimension of the orifices of the passages passing through the plugs of valves (3) and (5) lies between 2 and 200 times the dimension of the largest particles contained in the reactor (1).

7. Apparatus according to any of the Claims 1 to 6, characterised in that the dimensions of the orifice of the passages passing through the plugs of the valves (3) and (5) and equal to or smaller than 0.35 D, D being the mean exterior diameter of the plug.

8. Apparatus according to any of the Claims 1 to 7 characterised in that the said valves are spherical plug valves.

9. A process for discharging solid particulate polyolefin product from a gas-fluidised bed polymerisation reactor (1) using the apparatus claimed in claim 1, wherein the gas pressure in the reactor (1) is higher than that in the downstream receiver, the said process being characterised in that it comprises the following sequential cycle of operations as the valves (3) and (5) undergo continuous rotation;
   A. both valves (3) and (5) are at their fully closed position;

B. valve (3) opens progressively to admit solid particulate product and gas from reactor (1) into vessel (4), valve (5) remaining closed;

C. valve (3) closes, valve (5) remaining closed;

D. valve (5) opens progressively so that solid particulate product and gas discharge from vessel (4) into the receiver situated downstream, valve (3) remaining closed;

E. valve (5) closes and valve (3) remains closed and cycle resumes at step A.

10. Process in claim 9, such that the difference between the pressure in the reactor (1) and the receiver downstream of it, liesbetween 0.1 MPa and 0.3 MPa.

11. Process claimed in claims 9 or 10, characterised in that the speed of rotation of the valves lies between 0.5 and 10 revolutions per minute.

**Revendications**

1. Appareil destiné à décharger des polyoléfines en particules à partir d'un réacteur dans lequel est effectuée une polymérisation en lit fluidisé en phase gazeuse d'une ou plusieurs alpha-oléfines, l'appareil comprenant une cuve (4) reliée à un réacteur (1), au moyen d'un tube (2) comportant une valve à boisseau rotative (3), et reliée à un récepteur situé en aval, au moyen d'un tube (6) comportant une valve à boisseau rotative (5), ledit appareil étant caractérisé en ce que :
   - les deux valves à boisséau rotatives (3) et (5) comprennent des moyens d'entraînement pour les faire tourner de façon continue et des moyens de liaison tels que les deux valves ne peuvent pas, au cours de l'opération, être totalement ni même partiellement ouvertes au même instant, et
   - le volume de la cuve (4) est compris entre 1/10 et 1/1000, et de préférence entre 1/100 et 1/500 du volume du solide fluidisé contenu dans le réacteur (1).

2. Appareil selon la revendication 1, caractérisé en ce que le moyen de liaison comprend une liaison mécanique ou électrique entre les deux vannes à boisseau rotatives (3) et (5).

3. Appareil selon la revendication 1 ou la revendication 2, caractérisé en ce que le moyen d'entraînement comprend un moteur unique, à vitesse variable.

4. Appareil selon l'une quelconque des revendications 1 à 3, dans lequel les passages prévus dans les boisseaux des valves (3) et (5) sont droits et leurs axes sont respectivement, perpendiculaires aux axes de rotation des valves (3) et (5).

5. Appareil selon la revendication 4, dans lequel les passages des boisseaux (3) et (5) sont cylindriques, à base circulaire.

6. Appareil selon l'une quelconque des revendications 1 à 5, caractérisé en ce que la dimension des orifices des passages traversant les boisseaux des valves (3) et (5) est comprise entre 2 et 200 fois la dimension des plus grandes particules contenues dans le réacteur (1).

7. Appareil selon l'une quelconque des revendications 1 à 6, caractérisé en ce que les dimensions de l'orifice des passages traversant les boisseaux des valves (3) et (5) sont égales ou inférieures à 0,35 D, D étant le diamètre extérieur moyen du boisseau.

8. Appareil selon l'une quelconque des revendications 1 à 7, caractérisé en ce que lesdites valves sont des valves à boisseau sphériques.

9. Procédé pour décharger des polyoléfines en particules solides à partir d'un réacteur (1) de polymérisation en lit fluidisé en phase gazeuse utilisant l'appareil selon la revendication 1, dans lequel la pression de gaz dans le réacteur (1) est supérieure à celle du récepteur aval, ledit procédé étant caractérisé en ce qu'il comprend le cycle séquentiel suivant d'opérations lorsque les valves (3) et (5) sont soumises à une rotation continue :

A. les valves (3) et (5) sont toutes deux dans leur position totalement fermée ;

B. la valve (3) s'ouvre progressivement pour admettre un produit en particules solides et un gaz depuis le réacteur (1) vers la cuve (4), la valve (5) restant fermée ;

C. la valve (3) se ferme, la valve (5) restant fermée;

D. la valve (5) s'ouvre progressivement de façon que le produit en particules solides et le gaz se déchargent de la cuve (4) vers le récepteur situé en aval, la valve (3) restant fermée ;

E. la valve (5) se ferme et la valve (3) reste fermée et le cycle reprend à l'étape A.

10. Procédé selon la revendication 9, dans lequel la différence entre la pression dans le réacteur (1) et le récepteur en aval de celui-ci est comprise entre 0,1 MPa et 0,3 MPa.

11. Procédé selon l'une des revendications 9 ou 10, caractérisé en ce que la vitesse de rotation des valves est comprise entre 0,5 et 10 tours par minute.

**Patentansprüche**

1. Apparat zum Ablassen von teilchenförmigem Polyolefinprodukt aus einem Reaktor worin Gaswirbelbettpolymerisation eines oder mehrerer Alpha-Olefine durchgeführt wird, wobei der Apparat ein Gefäß (4) umfaßt, das mit dem Reaktor (1) durch eine Rohrleitung (2), die mit einem drehbaren Stopfenventil (3) ausgestattet ist, verbunden ist und mit einem Sammelgefäß, das stromabwärts angebracht ist, durch eine Rohrleitung (6), die mit einem drehbaren Stopfenventil (5) ausgestattet ist, verbunden ist, wobei der Apparat dadurch gekennzeichnet ist, daß

   - die zwei drehbaren Stopfenventile (3) und (5) Antriebsmittel zu deren kontinuierlicher Rotation umfassen und Verbindungsmittel, derart daß während des Betriebes die beiden Ventile nicht zur gleichen Zeit ganz oder auch nur teilweise offen sein können, und
   - das Volumen des Gefäßes (4) zwischen 1/10 und 1/1000, und vorzugsweise zwischen 1/100 und 1/500 des Volumens des im Reaktor (1) enthaltenen fluidisierten Feststoffes umfaßt.

2. Apparat nach Anspruch 1, dadurch gekennzeichnet, daß das Verbindungsmittel eine mechanische oder elektrische Verbindung zwischen den beiden drehbaren Stopfenventilen (3) und (5) umfaßt.

3. Apparat nach Anspruch 1 oder Anspruch 2, dadurch gekennzeichnet, daß das Antriebsmittel einen einzelnen Motor mit regelbarer Drehzahl umfaßt.

4. Apparat nach einem der Ansprüche 1 bis 3, worin die in den Stopfen der Ventile (3) und (5) vorhandenen Durchlässe gerade sind und eine Achse haben die senkrecht zur Rotationsachse der Ventile (3) und (5) ist.

5. Apparat nach Anspruch 4, worin die Durchlässe in den Stopfen (3) und (5) zylindrisch, mit einer kreisförmigen Basis sind.

6. Apparat nach einem der Ansprüche 1 bis 5, dadurch gekennzeichnet, daß die Dimension der Öffnungen der Durchlässe, die durch die Stopfen der Ventile (3) und (5) gehen, zwischen 2 und 200 mal größer ist als die Dimension der größten Teilchen, die im Reaktor (1) enthalten sind.

7. Apparat nach einem der Ansprüche 1 bis 6, dadurch gekennzeichnet, daß die Dimension der Öffnungen in den Durchlässen, die durch die Stopfen der Ventile (3) und (5) gehen, gleich oder kleiner als 0,35 D sind, wobei D der mittlere äußere Durchmesser des Stopfens ist.

8. Apparat nach einem der Ansprüche 1 bis 7, dadurch gekennzeichnet, daß die Ventile Kugelstopfenventile sind.

9. Verfahren zum Ablassen von teilchenförmigem Polyolefinprodukt aus einem Gaswirbelbettpolymerisationsreaktor (1), wobei der Apparat wie in Anspruch 1 beansprucht benutzt wird, worin der Gasdruck im Reaktor (1) höher ist als der im stromabwärts gelegenen Sammelgefäß, wobei dieses Verfahren dadurch gekennzeichnet ist, daß es den folgenden aufeinanderfolgenden Zyklus an Verfahrensschritten umfaßt, wie die Ventile (3) und (5) einer kontinuierlichen Rotation unterzogen werden;

   A. beide Ventile (3) und (5) sind in völlig geschlossener Position;
   B. Ventil (3) öffnet sich fortschreitend um festes teilchenförmiges Produkt und Gas vom Reaktor (1) in das Gefäß (4) einzulassen, wobei Ventil (5) geschlossen bleibt;
   C. Ventil (3) schließt sich, Ventil (5) bleibt geschlossen;
   D. Ventil (5) öffnet sich fortschreitend, so daß das feste teilchenförmige Produkt und das Gas aus dem Gefäß (4) in das Sammelgefäß, das sich stromabwärts befindet, ausfließt, wobei Ventil (3) geschlossen bleibt.
   E. Ventil (5) schließt sich und Ventil (3) bleibt geschlossen und der Zyklus beginnt wieder mit Schritt A.

10. Verfahren wie in 9 beansprucht, derart, daß die Differenz zwischen dem Druck im Reaktor (1) und dem Sammelgefäß stromabwärts davon zwischen 0,1 MPa und 0,3 MPa liegt.

11. Verfahren wie in Ansprüchen 9 oder 10 beansprucht, dadurch gekennzeichnet, daß die Rotationsgeschwindigkeit der Ventile zwischen 0,5 und 10 Umdrehungen pro Minute liegt.